# FASCICULE DE BREVET EUROPEEN

(11) **EP 1 319 479 B1**
(45) Date de publication et mention de la délivrance du brevet: **22.09.2004**
(21) Numéro de dépôt: 02293063.0
(22) Date de dépôt: 11.12.2002
(51) Int. Cl.: B25J 9/10, B23Q 5/34, B65G 47/90

(54) **Dispositif de transfert d'objets industriels entre deux positions**
Vorrichtung zur Übertragung von Objeckten zwischen zwei Positionen
Device for transferring industrial objects between two positions

(30) Priorité: 12.12.2001 FR 0116090
(43) Date de publication de la demande: 18.06.2003
(73) Titulaire: MACHINES DUBUIT, 93160 Noisy le Grand (FR)
(72) Inventeur: Dumenil, François, 77173 Chaumes en Brie (FR); Marette, Gilles, 77120 Coulommiers (FR)
(74) Mandataire: Santarelli

(56) Documents cités:
- EP-A- 0 061 504
- WO-A-01/68490
- FR-A- 2 608 492
- US-A- 3 587 888

## Description

L'invention concerne un dispositif de transfert d'objets industriels d'une première position vers une deuxième position.

On connaît des appareils appelés manipulateurs qui, par exemple, prennent un objet agencé horizontalement, dans une première position, sur un mandrin d'une machine ayant son axe dans un plan horizontal, le transfèrent et le déposent verticalement sur un convoyeur, dans une deuxième position.

Un manipulateur de ce type comprend généralement deux vérins pour transférer l'objet de la première position vers la deuxième position.

Un premier vérin dit de translation déplace, suivant un mouvement de translation vers l'avant, un bras manipulateur équipé, par exemple, d'une ventouse afin d'amener celle-ci au contact de l'objet placé dans la première position horizontale.

Un conduit d'amenée d'air comprimé relié à la ventouse permet, lorsqu'une dépression est créée à l'intérieur de ce conduit, d'aspirer l'objet et de le maintenir au contact de la ventouse pendant le temps souhaité et, notamment, durant tout le déplacement du bras manipulateur.

Le premier vérin de translation déplace ensuite le bras manipulateur portant l'objet dans un mouvement de translation arrière.

Un second vérin dit rotatif impose alors au premier vérin de translation un mouvement de rotation pour l'amener d'une position horizontale à une position verticale.

Dans cette dernière position, le premier vérin déplace le bras manipulateur suivant un mouvement de translation vers l'avant, afin d'amener l'objet dans sa deuxième position verticale sur le convoyeur.

La dépression cessant dans le conduit, l'objet n'est plus maintenu contre la ventouse et le premier vérin peut alors être ramené en arrière pour s'occuper ensuite du transfert d'un autre objet.

Un tel manipulateur présente cependant des inconvénients.

En effet, le second vérin doit être dimensionné pour être capable de déplacer le premier vérin.

Les efforts mis en jeu par le manipulateur sont donc importants.

En outre, le déplacement d'un vérin représente une masse embarquée non négligeable, ce qui se traduit par une inertie considérable du manipulateur.

Par ailleurs, s'agissant de mouvements pneumatiques, le phasage des différents mouvements, s'il est réalisé pour n'importe quelle vitesse de fonctionnement, conduit à un temps de rotation relativement faible, ce qui induit des phénomènes dynamiques importants (vibrations ...).

On connaît également des dispositifs de transfert d'objets d'une première position vers une deuxième position comportant un bras de manipulation muni d'un élément de guidage se déplaçant à l'intérieur d'une rainure profilée.

Le document US 3 587 888 (William H. Warren) décrit un tel dispositif, où un bras de manipulation effectue un mouvement combiné de rétraction/extension et de pivotement, le pivot étant agencé à l'intérieur de la courbure d'une rainure de guidage profilée.

Le document EP 0 061 504 (L. Schuler GmbH) décrit aussi un dispositif où un bras de manipulation, monté en pivotement sur une équerre mobile en translation, est guidée grâce à une rainure profilée.

La présente invention vise à remédier à au moins un des inconvénients précités en proposant un dispositif de transfert d'au moins un objet d'une première position vers une deuxième position, comportant :
- une structure mobile portant un bras de manipulation équipé d'au moins un organe de préhension et de positionnement d'au moins un objet,
- une unité d'actionnement de la structure mobile qui permet, d'une part, un mouvement alternatif de rétractation et d'extension du bras de manipulation pour amener l'organe de préhension et de positionnement d'une première position d'extension, dans laquelle il est apte à prendre un objet placé dans sa première position, à une position rétractée, puis à une deuxième position d'extension, dans laquelle il est apte à positionner l'objet dans sa deuxième position et, d'autre part, un mouvement de pivotement du bras de manipulation par rapport à un pivot pour amener ledit bras d'une première direction longitudinale, dans laquelle l'organe de préhension et de positionnement est en vis-à-vis de la première position de l'objet, à une deuxième direction longitudinale d'orientation angulaire différente, dans laquelle l'organe de préhension et de positionnement est en vis-à-vis de la deuxième position de l'objet, les deux mouvements se recouvrant au moins en partie dans le temps,
- au moins un élément de guidage de la structure mobile dans son mouvement, l'élément de guidage se déplaçant suivant une trajectoire ayant une portion courbe qui correspond au mouvement de pivotement du bras, le pivot étant agencé à l'extérieur de la courbure.

Avantageusement, le dispositif selon l'invention permet, grâce à un actionneur unique de rétracter et de déployer un bras de manipulation, tout en faisant effectuer à ce bras un changement de direction correspondant à une orientation angulaire différente.

Ainsi, il n'est plus nécessaire d'embarquer sur la structure mobile du dispositif un actionneur supplémentaire pour prendre en charge un mouvement spécifique.

De ce fait, les efforts mis en jeu sont réduits.

Par ailleurs, en déportant le pivot qui est utilisé dans le mouvement de pivotement du bras de manipulation à l'extérieur de la courbure de la trajectoire de l'élément de guidage, cela procure une grande stabilité au dispositif selon l'invention.

En effet, l'élément de guidage se tient toujours ainsi dans une position relativement éloignée du pivot, la position dans laquelle l'élément de guidage est le plus proche du pivot étant celle pour laquelle l'élément de guidage parcourt la portion courbe de la trajectoire au droit du pivot.

Le dispositif serait beaucoup moins stable si le pivot était placé à l'intérieur de la courbure de la trajectoire de l'élément de guidage.

Selon une caractéristique avantageuse, lorsque le bras de manipulation est dans une position extrême correspondant à la première ou deuxième position d'extension, l'élément de guidage est déporté par rapport au pivot et est agencé dans une position diamétralement opposée à celle de l'organe de préhension et de positionnement du bras.

Ceci confère une grande rigidité angulaire au bras dans ses positions d'extension.

Selon une caractéristique avantageuse, l'élément de guidage se déplace à l'intérieur d'une rainure profilée.

Selon une caractéristique avantageuse, la rainure profilée comporte une rampe correspondant à la portion courbe de la trajectoire de l'élément de guidage et qui permet, lorsque l'élément de guidage s'engage sur cette rampe sous l'action de l'unité d'actionnement, de provoquer le mouvement de pivotement du bras selon une loi de déplacement douce.

La loi de déplacement douce est une loi qui permet d'éviter les mouvements brusques et donc les appels de couple.

Selon une caractéristique avantageuse, le bras manipulateur se déplace, lors du changement de direction, suivant une loi de déplacement du type (sinθ) - θ, où θ représente le temps.

Selon une caractéristique avantageuse, le profil de la rampe est déterminé conjointement avec l'unité d'actionnement pour que le mouvement de pivotement du bras s'effectue selon une loi de déplacement douce.

On détermine ainsi ce profil par traçages successifs.

Selon une caractéristique avantageuse, le mouvement de l'élément de guidage dans la rainure profilée est décomposé en un premier mouvement de translation suivant la première direction longitudinale, un mouvement de pivotement et un deuxième mouvement de translation suivant la deuxième direction longitudinale.

La rainure profilée est conçue pour que les mouvements de translation soient privilégiés par rapport au mouvement de pivotement afin de favoriser la rigidité angulaire du bras en translation.

C'est en effet durant les phases de translation que se déroulent les opérations de préhension et de positionnement d'objets.

Selon une caractéristique avantageuse, la rainure profilée a une forme générale de L renversé.

Selon une caractéristique avantageuse, l'unité d'actionnement est apte à arrêter le mouvement de l'élément de guidage en tout point de sa trajectoire.

Plus particulièrement, il est intéressant d'arrêter l'élément de guidage dans une portion rectiligne de sa trajectoire afin de pouvoir, par exemple, régler la course du bras de manipulation comme souhaité.

C'est en effet lorsque l'élément de guidage parcourt les portions de trajectoire rectilignes que le bras de manipulation s'approche ou s'éloigne d'une position extrême et qu'il peut être nécessaire de modifier la course du bras, par exemple, pour tenir compte des dimensions particulières d'un objet ou de la distance par rapport à un convoyeur d'objets.

On utilise pour cela, par exemple, un moteur à commande numérique.

Selon une caractéristique avantageuse, l'unité d'actionnement transmet un mouvement à la structure mobile par l'intermédiaire d'un organe d'entraînement.

Selon une caractéristique avantageuse, le dispositif comporte une unité de transformation du mouvement transmis à l'organe d'entraînement en un mouvement alternatif d'avance et de recul suivant une direction longitudinale et de transmission de ce mouvement transformé au bras manipulateur.

Selon une caractéristique avantageuse, l'unité de transformation et de transmission de mouvement comporte un élément de transmission sans fin monté autour de deux axes de rotation longitudinalement espacés, ledit élément comportant deux portions en vis-à-vis qui, lors d'un mouvement de l'élément sans fin, se déplacent en sens inverse l'une de l'autre, suivant une même direction longitudinale.

Selon une caractéristique avantageuse, l'organe d'entraînement est solidaire d'une portion tandis que le bras manipulateur est solidaire de l'autre portion.

Selon une caractéristique avantageuse, le dispositif comporte une unité de modification de la course du bras de manipulation entre sa position rétractée et au moins l'une de ses première et deuxième positions d'extension.

Ceci permet avantageusement d'augmenter la portée du bras de manipulation dans au moins l'une de ses positions d'extension, ce qui peut être utile, par exemple, lorsque le dispositif transfère des objets de petites dimensions après avoir transféré des objets de grandes dimensions.

Selon une caractéristique particulière, l'unité de modification de la course du bras comporte un second élément de transmission sans fin monté autour des deux axes de rotation et agencé par rapport au premier élément de transmission de manière à ce que les déplacements respectifs desdits éléments de transmission soient démultipliés l'un par rapport à l'autre.

Ainsi, le déplacement du premier élément de transmission sans fin est amplifié par le déplacement du second élément de transmission sans fin.

Selon une caractéristique avantageuse, le second élément de transmission sans fin comporte deux portions en vis-à-vis qui, lors d'un mouvement de l'élément sans fin, se déplacent respectivement dans le même sens et la même direction que les portions du premier élément, le bras de manipulation étant solidaire de la portion, tandis que l'organe d'entraînement est solidaire de la portion du premier élément de transmission sans fin.

Selon une caractéristique avantageuse, l'élément de transmission sans fin est une courroie.

Selon une caracténstique avantageuse, l'organe d'entraînement est relié à l'élément de guidage se déplaçant dans la rainure profilée.

Selon une caractéristique avantageuse, l'unité d'actionnement entraîne un organe de commande dans un mouvement de rotation alternatif autour d'un axe agencé à une de ses extrémités, l'extrémité opposée de l'organe de commande étant aménagée pour recevoir au moins une partie de l'organe d'entraînement.

Ainsi, un mouvement de rotation alternatif imposé par l'actionneur permet de faire effectuer au bras de manipulation un mouvement alternatif de rétractation et d'extension combiné à un changement de direction qui correspond, par exemple, à une rotation.

Selon une caractéristique avantageuse, le bras de manipulation est équipé de deux organes de préhension et de positionnement d'un objet.

Ceci permet de prendre un objet et d'en déposer un autre dans l'une des première ou deuxième positions et donc le bras de manipulation ne se déplace jamais à vide.

Selon une caractéristique avantageuse, le dispositif comporte une chaîne articulée solidaire d'une partie de la structure reliée au bras de manipulation et renfermant des moyens de commande de l'organe de préhension et de positionnement d'un objet.

D'autres avantages apparaîtront au cours de la description qui va suivre donnée uniquement à titre d'exemple non limitatif, et faite en référence aux dessins annexés sur lesquels :
- la figure 1 est une vue schématique de côté du dispositif de transfert d'objets selon l'invention ;
- la figure 2 est une vue de face du dispositif représenté à la figure 1 ;
- la figure 3 est une vue schématique suivant la coupe AA de la figure 1 ;
- la figure 4 est une vue en perspective du dispositif représenté sur les figures 1 à 3 ;
- les figures 5 à 10 sont des vues schématiques en perspective représentant la structure mobile 14 du dispositif de transfert selon l'invention dans différentes positions, au cours du transfert d'un objet 170, d'une première position représentée sur la figure 5 vers une deuxième position représentée sur la figure 10 ;
- les figures 11a et 11b sont des vues schématiques d'une variante de réalisation du dispositif représenté aux figures précédentes.

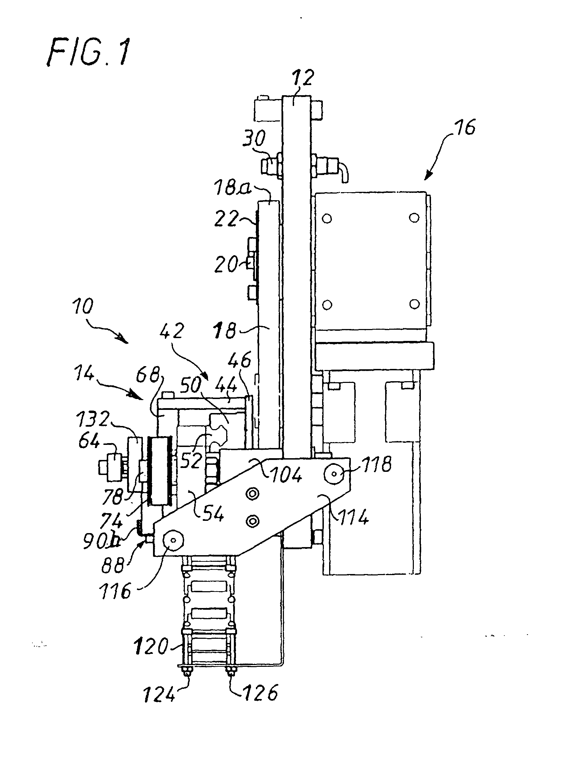

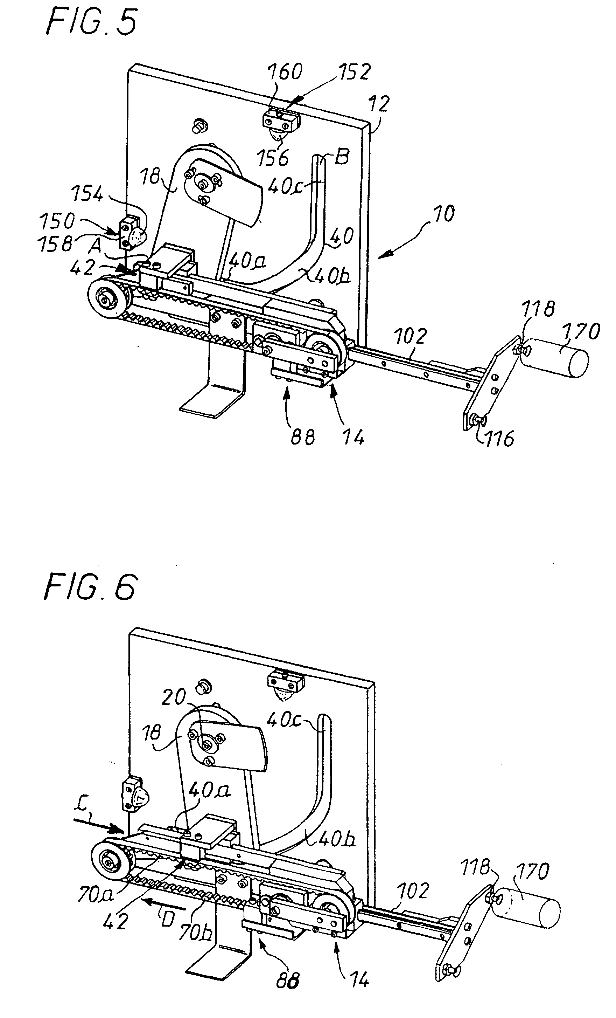

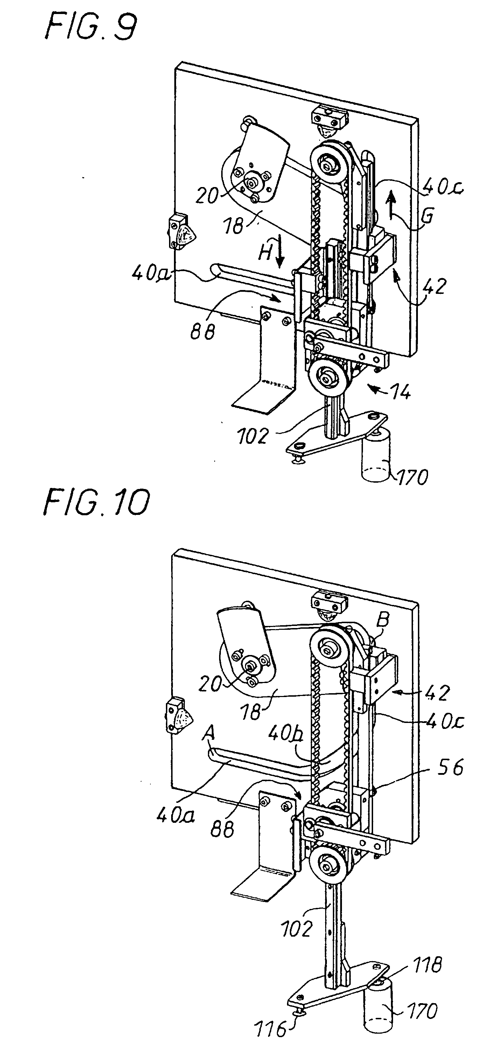

Comme représenté sur la figure 1 et désigné par la référence générale notée 10, un dispositif manipulateur sert au transfert d'objets d'une première position dans laquelle, par exemple, les objets sont disposés horizontalement (figure 5) vers une deuxième position dans laquelle, par exemple, les objets sont disposés verticalement (figure 10).

Ce dispositif est supporté par un bâti fixe 12 se présentant sous la forme d'une plaque parallélépipédique.

Le dispositif selon l'invention comporte une structure 14 assujettie au bâti 12 et qui est mobile par rapport à ce dernier.

Le dispositif 10 comporte également une unité d'actionnement unique 16 qui a pour fonction d'entraîner la structure 14 dans un mouvement qui sera décrit ultérieurement.

Cette unité d'actionnement 16 transmet à la structure mobile 14 un mouvement alternatif.

Par exemple, l'unité d'actionnement 16 se présente sous la forme d'un groupe moto-réducteur dans lequel le moteur est un moteur à commande numérique qui permet d'assurer une vitesse constante lors du déplacement de la structure 14, dans son mouvement de pivotement, comme on le verra ultérieurement.

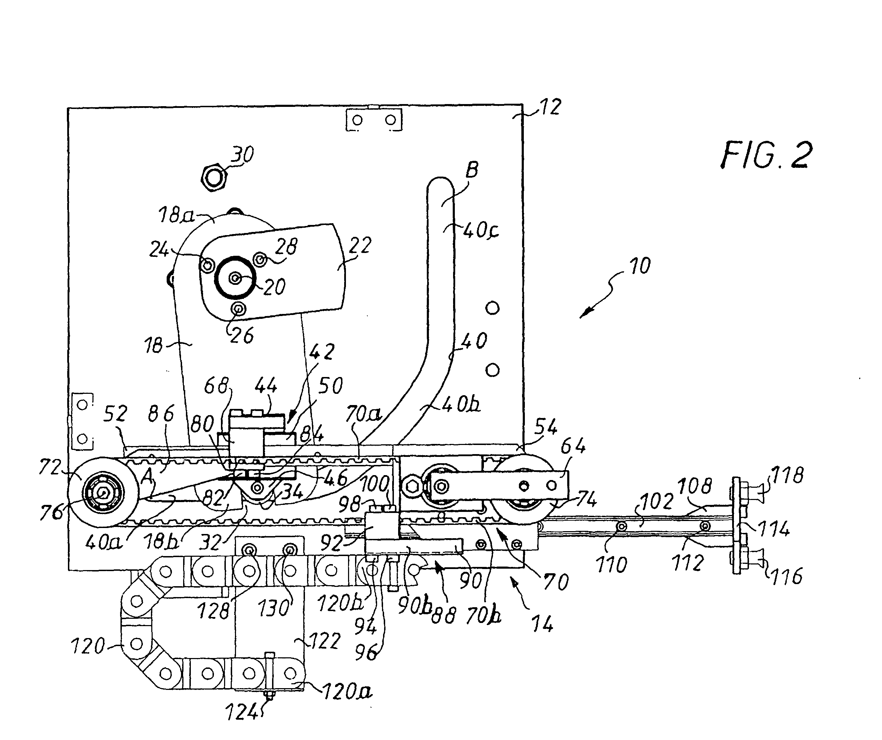

Ainsi que représenté sur la figure 2, le dispositif 10 comporte un organe de commande 18 se présentant sous la forme d'une fourchette de commande en forme de plaque, comportant à une de ses extrémités 18a un orifice traversant ladite plaque dans son épaisseur et recevant un axe 20 relié à l'arbre de transmission du groupe moto-réducteur 16.

L'organe de commande 18 est rendu solidaire de cet axe 20 afin que la rotation de ce dernier assure l'entraînement en rotation de l'organe de commande 18.

Une plaque 22, montée de manière fixe sur l'organe de commande 18 par l'intermédiaire de trois vis de fixation 24, 26, 28, est utilisée en coopération avec un détecteur 30 du type cellule photo-électrique agencé dans le bâti 12, au-dessus de l'organe de commande 18, afin de transmettre au groupe moto-réducteur 16 l'information sur la fin de la course de l'organe de commande.

En effet, l'organe de commande 18 se déplace, comme représenté sur la figure 2, entre les positions repérées par les lettres A et B et le moteur à commande numérique du groupe moto-réducteur 16 ne possède aucun repère lors de ce mouvement pour savoir dans quelle position se trouve l'organe de commande 18.

Ainsi, lorsque cet organe de commande est dans la position B (figure 10), la plaque 22 se trouve en vis-à-vis du détecteur 30 et fournit, de cette façon, au moteur à commande numérique l'information selon laquelle l'organe de commande est arrivé en fin de course.

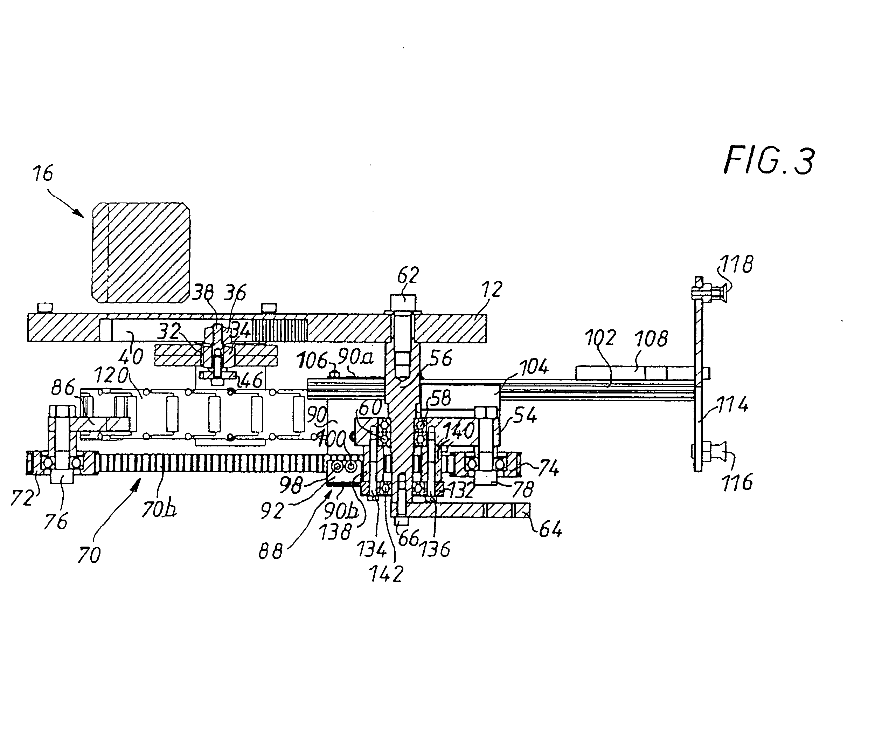

A l'extrémité opposée 18b de l'organe de commande 18, est prévue une fente 32 (figures 2 et 3) dans laquelle est logé un galet d'entraînement 34 destiné à transmettre le mouvement de rotation alternatif de l'organe de commande 18 à la structure mobile 14.

Un deuxième galet 36, appelé galet de came, est monté sur le même axe 38 que le galet d'entraînement 34 et suit donc le même mouvement que celui-ci.

Ce galet de came 36 fait office d'élément de guidage de la structure 14 dans son mouvement en se déplaçant à l'intérieur d'une rainure profilée 40 qui peut traverser le bâti 12 dans toute son épaisseur ou non.

Comme représenté sur la figure 2, la rainure profilée 40 a une forme générale de L renversé formée de trois portions : une première portion rectiligne horizontale 40a, une deuxième portion courbe 40b et une troisième portion rectiligne verticale 40c.

On notera que le galet d'entraînement 34 dispose d'une certaine liberté de mouvement à l'intérieur de la fente 32, ce qui lui permet de parcourir la rainure profilée 40 qui ne correspond pas à une trajectoire circulaire.

Les portions rectilignes 40a et 40c servent, comme on le verra ultérieurement, à déplacer une partie de la structure mobile 14 dans un mouvement de translation longitudinal respectivement suivant une première et une deuxième direction longitudinale.

Lorsque l'unité d'actionnement comporte un moteur à commande numérique, le dispositif selon l'invention permet de contrôler très précisément et de maintenir les accélérations et les décélérations dans les portions rectilignes 40a et 40c.

La portion courbe 40b permet, quant à elle, de provoquer un changement de direction de la structure mobile pour passer de la première direction longitudinale à la deuxième direction longitudinale et inversement.

Plus particulièrement, cette portion courbe 40b permet de faire effectuer à la structure mobile 14 un mouvement de pivotement par rapport au bâti 12.

La portion courbe 40b de la rainure profilée se présente sous la forme d'une rampe pour que, à vitesse de rotation constante du moteur, le galet de guidage 36, le galet d'entraînement 34 et la structure mobile 14 qui y est reliée effectuent un mouvement de pivotement selon une loi de déplacement qualifiée de "douce".

Par loi de déplacement ou de mouvement "douce", on entend que le galet de came 36 s'engageant sur cette rampe suive un mouvement ne provoquant pas d'appel de couple ni d'à-coup, permette une mise en charge progressive des efforts et assure une continuité dans la transmission des contraintes.

On notera que, d'une manière générale, cette rampe peut être profilée de manière à ce qu'un élément de guidage la parcourant suive une loi de mouvement douce quel que soit l'actionneur du mouvement (moteur, bielle ...).

Par exemple, une croix de malte ne permet pas d'obtenir une loi de mouvement douce au sens de la présente invention.

Il convient de noter que la partie de la structure mobile 14, qui sera décrite ultérieurement et qui sert à transférer les objets de la première position vers la deuxième position se déplace, au cours du changement de direction longitudinale, suivant une loi de déplacement du type (Sinθ) - θ, où θ représente le temps.

Pour que la partie de la structure suive cette loi de déplacement, on adapte en conséquence le profil de la rampe de la portion courbe 40b de la rainure profilée 40 par traçages successifs en fonction de l'unité d'actionnement utilisée.

Le dispositif 10 selon l'invention comporte, ainsi que représenté sur les figures 1, 2 et 4, un premier organe d'entraînement 42 dont fait partie le galet d'entraînement 34 représenté à la figure 3 et qui est relié à l'élément de guidage 36.

L'organe d'entraînement 42 possède une structure générale en forme de portique comprenant un plateau supérieur 44 horizontal, fixé à angle droit, à une de ses extrémités, à une plaque verticale 46 agencée en vis-à-vis de la fourchette de commande 18 et qui est maintenue solidaire de l'ensemble formé du double galet 34, 36 et de l'axe 38, au moyen d'une vis de fixation 48 prévue dans la partie inférieure de cette plaque (figures 2 et 3).

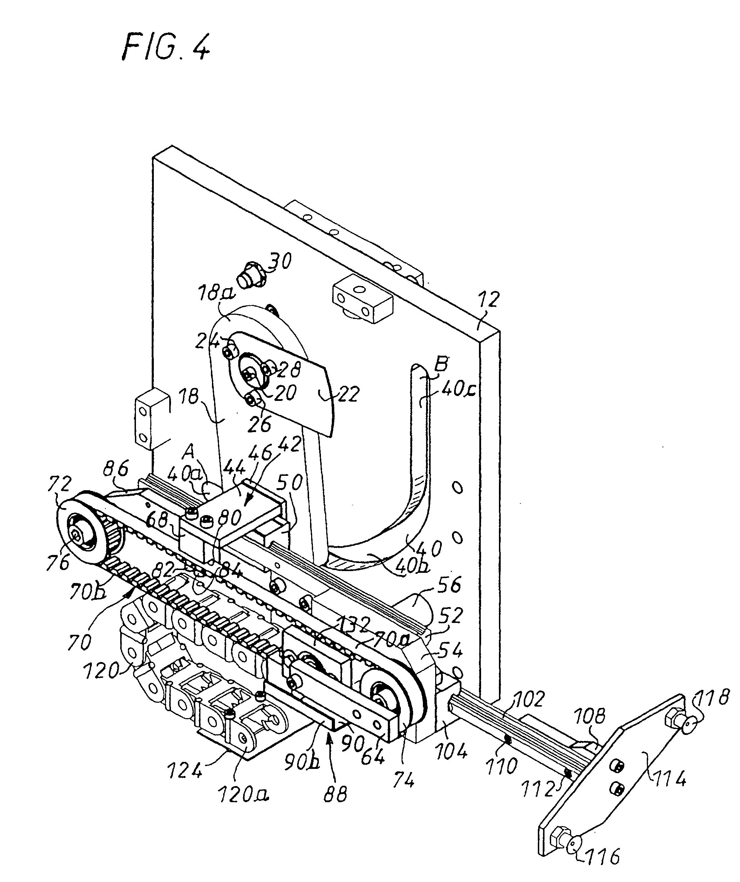

Comme représenté sur les figures 1 et 4, la plaque 46 est solidaire d'un patin 50 monté de manière coulissante sur un rail horizontal supérieur 52.

Ce rail 52 est monté de manière fixe sur une pièce 54 formant support pour la structure mobile 14 lors de son mouvement de pivotement par rapport au bâti 12.

Lors du mouvement de rotation alternatif de l'organe de commande 18, le patin 50 coulisse sur le rail 52 et fait ainsi effectuer à l'organe d'entraînement 42 un mouvement de translation suivant une direction longitudinale.

Comme représenté sur la figure 3, la pièce formant support 54 est montée sur un axe formant pivot 56 par l'intermédiaire de deux roulements 58 et 60.

L'axe formant pivot 56 traverse la pièce formant support 54 dans son épaisseur et est relié, à une extrémité, au bâti 12 auquel elle est assujettie par l'intermédiaire d'un moyen de fixation 62 et, à son extrémité opposée, à un bras fixe 64 par l'intermédiaire d'un moyen de fixation 66.

L'axe formant pivot 56 est, par exemple, placé dans l'alignement des portions rectilignes 40a et 40c de la rainure profilée, mais cela ne constitue toutefois pas une obligation.

De manière non représentée, le bras 64 est fixé au bâti 12 dont une partie seulement est représentée sur les dessins.

L'organe d'entraînement 42 comporte également un élément vertical 68 parallèle à la plaque 46 et monté à angle droit avec le plateau 44 à son extrémité opposée.

Cet élément 68 sert à fixer l'organe d'entraînement 42 à un élément de transmission sans fin 70.

Cet élément de transmission sans fin 70 se présente sous la forme d'une courroie crantée qui est montée autour de deux poulies crantées 72, 74 longitudinalement espacées et qui sont elles-mêmes libres en rotation autour de deux axes 76 et 78.

On notera que l'élément de transmission sans fin peut être une courroie lisse, voire une bande transporteuse, une chaîne, ...

Par ailleurs, les poulies 72 et 74 peuvent également ne pas être crantées.

L'élément de fixation 68 de l'organe d'entraînement 42 comporte une encoche 80 prévue pour recevoir une portion de la courroie 70 et deux vis 82, 84 sont prévues pour pincer la courroie et la maintenir fermement à l'intérieur de la fente 80, en contact avec l'élément 68 de l'organe d'entraînement 42.

De manière non représentée sur les figures, une plaquette de serrage est prévue entre les extrémités débouchantes des vis et la courroie.

Une pièce 86 montée de manière fixe sur l'axe de rotation 76 est attelée au rail supérieur 52 afin d'assurer une certaine rigidité de la structure lors du mouvement de pivotement de celle-ci.

La courroie 70 comporte une portion disposée en vis-à-vis de la portion 70a dont est solidaire l'organe d'entraînement 42, qui est notée 70b et à laquelle est fixé un second organe d'entraînement 88.

Cet organe 88 comporte une embase 90 ayant la forme d'un profilé en U ouvert vers le haut (figure 4).

Un élément d'attelage ou de fixation 92 identique à l'élément de fixation 68 de l'organe d'entraînement 42 est solidarisé à l'embase 90 par l'intermédiaire de deux vis 94, 96 et présente, de manière identique à l'élément 68, une encoche, non représentée sur les figures, dans laquelle s'insère la portion de courroie 70b.

De façon identique à l'élément 68, une plaquette de serrage est également prévue.

Deux vis de fixation 98 et 100 assurent le pincement de cette portion de courroie et son maintien de manière ferme contre l'élément d'attelage 92.

De cette façon, l'organe d'entraînement 88 est solidaire de la portion de courroie 70b.

Par ailleurs, le dispositif selon l'invention comporte également un bras dit de manipulation 102 qui se présente sous la forme d'un rail analogue au rail supérieur 52 précédemment décrit et qui est fixé à l'une des ailes 90a de l'embase 90, l'élément de l'attelage 92 étant agencé à proximité de l'aile opposée 90b.

On notera que seul un moyen de fixation 106 du bras 102 à l'aile 90a de l'embase 90 est représenté sur la figure 3.

Un patin 104 dit patin inférieur est fixé à la pièce formant support de pivotement 54 et le bras de manipulation 102 coulisse à l'intérieur de ce patin 104 lors de son mouvement de translation suivant une direction longitudinale.

A l'extrémité du bras de manipulation 102 opposée à celle fixée à l'embase 90, une pièce de renforcement 108 est solidarisée au bras parallèlement à celui-ci par l'intermédiaire de deux vis de fixation 110 et 112.

Cette pièce de renforcement présente une forme élargie à une de ses extrémités et porte, à celle-ci, un plateau 114 agencé perpendiculairement à la direction longitudinale de cette pièce.

Le plateau 114 comporte à ses deux extrémités opposées deux ventouses 116, 118 toutes deux reliées à un conduit d'amenée d'air comprimé non représenté.

Ces ventouses font office d'organes de préhension et de positionnement d'objets divers tels que celui représenté sur les figures 5 et 10 qui seront décrites ultérieurement.

On notera qu'à la place des ventouses, il est possible d'utiliser tout autre organe de préhension et de positionnement tel que, par exemple, une pince, un aimant, ...

Le dispositif selon l'invention comporte également une chaîne articulée appelée chaîne porte-câbles, notée 120 qui est solidaire, d'une part, du bâti 12 par l'intermédiaire d'une équerre 122, la chaîne étant fixée à la partie horizontale de l'équerre par des vis de fixation 124, 126 (figure 1) et l'équerre étant elle-même fixée au bâti 12 par l'intermédiaire de vis de fixation 128, 130.

Par ailleurs, la chaîne articulée est fixée à son extrémité opposée à celle 120a fixée au bâti, notée 120b, à l'embase 90 du second organe d'entraînement 88.

Cette chaîne articulée renferme des moyens de commande des organes de préhension et de positionnement 116 et 118 qui se présentent sous la forme du conduit d'amenée d'air comprimé précédemment évoqué.

Cette chaîne peut également renfermer des fils électriques, voire des capteurs ou bien des organes de transmission d'informations recueillies par un ou plusieurs capteurs placés en bout de bras de manipulation ou ailleurs.

La chaîne porte-câbles 120 se compose de maillons articulés à mobilité réduite en ce sens qu'ils peuvent effecteur l'un par rapport à l'autre des mouvements de rotation entre 0 et 180°.

Cette mobilité réduite permet d'éviter à la chaîne de s'affaisser lors de son déploiement pour suivre le mouvement du second organe d'entraînement 88 et de maîtriser la trajectoire de cette chaîne.

On notera qu'une plaque 132 est montée, par l'intermédiaire de vis de fixation 134, 136 et d'entretoises 138, 140, de manière fixe sur la pièce formant support de pivot 54 et est également montée autour du pivot 56, par l'intermédiaire d'un roulement 142.

Ainsi, cet agencement supplémentaire permet de supprimer le jeu transversal de la structure au niveau du pivot 56.

Comme décrit précédemment, l'unité d'actionnement 16 transmet à la structure mobile 14 un mouvement alternatif par l'intermédiaire du premier organe d'entraînement 42 dont fait partie le galet d'entraînement 34.

Ce premier organe d'entraînement 42 rendu solidaire de l'élément de transmission sans fin 70, et plus particulièrement, d'une portion 70a de celui-ci, transmet à cette portion 70a un mouvement de translation longitudinal dans un premier sens, suivant une première direction longitudinale.

Le premier organe se rapproche ainsi du pivot 56.

De ce fait, le bras de manipulation 102 solidaire du second organe d'entraînement 88, lui-même rendu solidaire de la portion 70b de l'élément de transmission sans fin 70, est entraîné dans un mouvement de translation longitudinal suivant la première direction longitudinale, dans un deuxième sens qui est opposé au premier sens de déplacement.

Le second organe s'éloigne ainsi du pivot 56.

Comme on le verra plus tard lors de la description faite en référence aux figures 5 à 10, lorsque le galet de came 36 parcourt la rainure profilée 40, le premier organe d'entraînement 42 effectue un mouvement d'avance et de recul en se déplaçant d'abord dans le premier sens évoqué ci-dessus, puis ensuite dans le deuxième sens.

Ainsi, le bras de manipulation 102 se déplace, de manière correspondante, dans le deuxième sens énoncé ci-dessus, à savoir qu'il effectue un mouvement de recul (position rétractée du bras de manipulation) et ensuite, se déplace dans le premier sens évoqué ci-dessus, à savoir qu'il avance (position d'extension du bras de manipulation).

On comprend ainsi que l'agencement du premier organe d'entraînement sur la première portion 70a de l'élément de transmission sans fin 70, et l'agencement du bras de manipulation 102 sur la deuxième portion 70b de cet élément de transmission sans fin, a permis de transformer le mouvement transmis par l'unité d'actionnement 16 au galet d'entraînement 34 en un mouvement alternatif d'avance et de recul, suivant une direction longitudinale, et de transmettre ce mouvement transformé d'avance et de recul au bras de manipulation 102, afin que celui-ci puisse, à son tour, se déplacer dans un mouvement alternatif, entre une position rétractée et une position d'extension.

Par ailleurs, au cours de ce même mouvement provoqué par l'unité d'actionnement 16, on effectue également un mouvement de pivotement de la structure mobile 14 par rapport au pivot 56, lorsque le galet de came 36 parcourt la rampe 40b de la rainure profilée 40.

Ainsi, avec un unique actionneur, le dispositif selon l'invention permet de combiner le mouvement de translation et de rotation pour amener le bras de manipulation 102 et, donc, les organes de préhension et de positionnement, d'une première position d'extension, par exemple, horizontale (figure 1) à une position rétractée puis, de cette position rétractée à une deuxième position d'extension, par exemple, verticale (figure 10), lorsque le bras a effectué en parallèle, un changement de direction entre les directions horizontale et verticale.

On notera que lorsque le bras de manipulation se trouve dans l'une de ces positions d'extension extrêmes représentées respectivement sur les figures 5 et 10, l'élément de guidage 36 se trouve respectivement dans les positions repérées par les lettres A et B.

Dans ces positions, l'élément de guidage est déporté par rapport au pivot 56 et se trouve agencé dans une position diamétralement opposée à celle des organes de préhension et de positionnement du bras de manipulation 102.

Cet agencement permet d'obtenir au niveau des organes de préhension et de positionnement 116 et 118 une grande rigidité angulaire.

Le jeu angulaire à l'extrémité du bras de manipulation 102 est donc parfaitement maîtrisé et considérablement réduit, ce qui permet d'éviter, par exemple, d'endommager les objets lors de leur préhension ou de leur positionnement.

Cet agencement est préférable, de ce point de vue, à un agencement dans lequel, lorsque le bras de manipulation se trouve dans une position extrême, soit pour prendre soit pour positionner un objet, l'élément de guidage est davantage rapproché de l'axe formant pivot.

En effet, dans cette dernière configuration, il est impossible de maîtriser le jeu angulaire en bout de bras de manipulation et, de ce fait, la préhension et le positionnement d'objets grâce à cet agencement seraient beaucoup moins précis.

Par ailleurs, pour favoriser la rigidité angulaire, lorsque le bras se trouve dans une position extrême ou proche d'une position extrême, il est préférable de privilégier les déplacements en translation par rapport à ceux en rotation.

En outre, la répartition quasi égale (1/3, 1/3, 1/3) du mouvement entre la première translation rectiligne dans la portion de rainure 40a, la rotation dans la portion courbe 40b et la deuxième translation rectiligne dans la dernière portion 40c, équilibre le mouvement et permet d'optimiser le temps de transfert des objets.

On va maintenant décrire en référence aux figures 5 à 10 le fonctionnement du dispositif 10 selon l'invention.

Sur la figure 5, la structure mobile 14 du dispositif se trouve dans une position extrême pour laquelle l'élément de guidage 36 est disposé à une des extrémités de la rainure 40 repérée par la lettre A.

On remarquera que le dispositif selon l'invention comprend deux butées 150 et 152 agencées sur deux bords adjacents du bâti 12 et qui sont chacune pourvues d'une pièce en caoutchouc respectivement notée 154, 156 et qui est respectivement solidaire d'un taquet 158, 160 fixé au bâti 12.

Ces butées sont là pour qu'en cas de dysfonctionnement de l'unité d'actionnement 16, ce soient elles qui arrêtent le mécanisme et non l'élément de guidage qui arriverait en butée au fond de la rainure, dans l'une des positions extrêmes A, B.

Dans la position représentée sur la figure 5, le premier organe d'entraînement 42 se trouve dans une position extrême correspondant à celle de l'élément de guidage dans la rainure profilée 40 (position A), tandis que le second organe d'entraînement 88 auquel est fixé le bras de manipulation 102 se trouve dans une position extrême opposée.

Dans cette position, le bras de manipulation 102 est orienté selon une première direction longitudinale dans laquelle l'organe de préhension et de positionnement 118 est en vis-à-vis d'un objet 170 agencé dans une première position qui est, par exemple, horizontale.

Plus particulièrement, dans cette position représentée sur la figure 5, le bras de manipulation 102 est placé dans une première position d'extension dans laquelle l'organe de préhension et de positionnement 118 est apte à prendre l'objet 170 placé dans sa première position.

Par exemple, l'objet dans cette première position est monté sur un mandrin non représenté.

Dans la position représentée sur la figure 5, l'autre organe de préhension et de positionnement 116 vient, par exemple, de déposer sur un mandrin non représenté un autre objet, également non représenté, et est maintenant libre de tout objet.

Sur la figure 6 qui suit, on a représenté la structure mobile 14 du dispositif selon l'invention dans une autre position, suite au mouvement de rotation communiqué par l'unité d'actionnement 16 au galet d'entraînement 34 du premier organe d'entraînement 42.

Dans cette position, l'élément de guidage 36 s'est déplacé, par rapport à sa position repérée par la lettre A sur la figure 5, le long de la portion rectiligne 40a de la rainure profilée 40, dans un mouvement de translation.

Le premier organe d'entraînement 42 s'est déplacé à son tour dans un mouvement de translation qui entraîne la portion 70a de la courroie 70 dans le sens indiqué par la flèche repérée par la lettre C.

De façon correspondante, la portion 70b de cette courroie est entraînée dans un mouvement de translation suivant le sens indiqué par la flèche repérée par la lettre D, entraînant ainsi dans son mouvement le second organe d'entraînement 88 et donc le bras de manipulation 102.

Le bras de manipulation 102 passe ainsi d'une première position d'extension représentée sur la figure 5 à une position intermédiaire représentée sur la figure 6 dans laquelle il est partiellement rétracté.

On notera que l'organe de préhension et de positionnement 118 qui est, par exemple, une ventouse, maintient l'objet 170 contre celle-ci grâce à un phénomène de dépression créé dans le conduit d'amenée d'air comprimé non représenté sur les figures, permettant ainsi de transférer l'objet 170 d'une première position horizontale à une deuxième position verticale (figure 10).

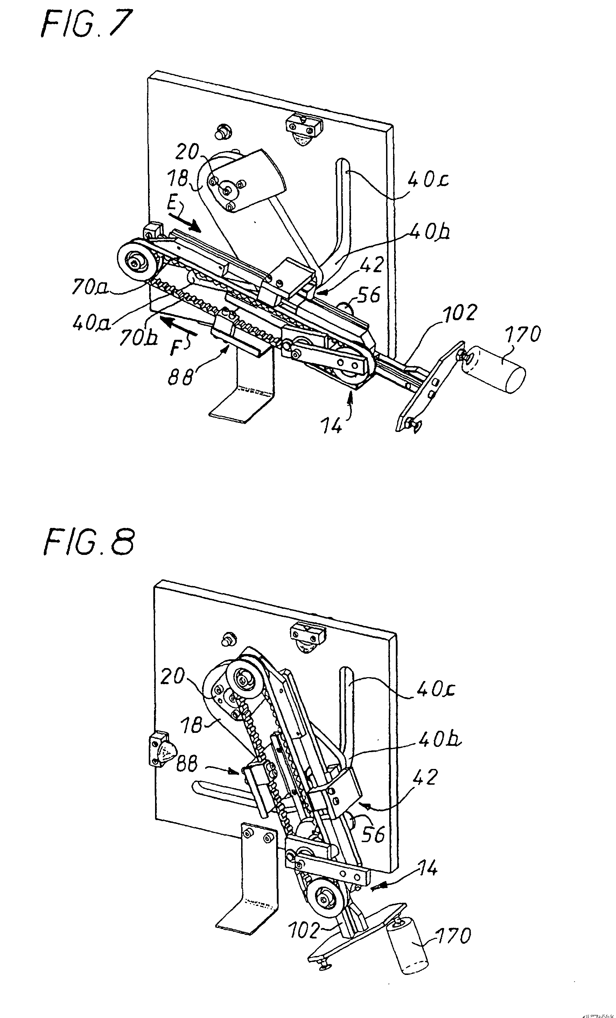

Sur la figure 7, on a représenté la structure mobile 14 dans une autre position qui est atteinte consécutivement à la poursuite du mouvement de rotation de l'organe de commande 18 autour de l'axe 20 et à l'engagement de l'élément de guidage 36 dans la portion courbe 40b de la rainure profilée 40.

Le parcours de la portion courbe 40b par cet élément de guidage va provoquer un changement de direction de la structure 14 et donc du bras de manipulation 102 et de l'objet 170 porté par ce bras.

Au cours de ce mouvement, le premier organe d'entraînement 42 entraîné par l'organe de commande 18 continue son mouvement de translation longitudinal, dans le sens indiqué par la flèche E, en entraînant de façon correspondante la portion de courroie 70a à laquelle il est attelé.

On notera que la direction de la flèche notée E possède une orientation angulaire différente de celle de la flèche notée C sur la figure 6, ce qui traduit la combinaison du mouvement de translation et de rotation autour du pivot 56 de la structure mobile 14.

De façon correspondante, la portion 70b de la courroie 70 poursuit son mouvement de translation longitudinal suivant la flèche indiquée par la lettre F, d'orientation angulaire différente de la flèche repérée par la lettre D sur la figure 6, et entraîne ainsi dans son mouvement le second organe d'entraînement 88.

De cette façon, le bras de manipulation 102 poursuit son mouvement de rétractation.

Le mouvement de rotation de la structure mobile 14 autour du pivot 56 se poursuit, suite à la progression de l'élément de guidage 36 dans la portion courbe 40b de la rainure profilée 40.

La structure mobile 14 atteint ensuite la position représentée sur la figure 8 dans laquelle les premier et deuxième organes d'entraînement, respectivement notés 42 et 88, ont achevé leur mouvement de translation et ont atteint une position extrême qui place le bras de manipulation 102 dans une orientation angulaire différente de celle représentée sur la figure 7 et dans une position longitudinale rétractée.

Le mouvement de rotation se poursuit alors tandis que le bras de manipulation reste dans cette position rétractée et l'élément de guidage 36 passe à proximité de l'extrémité du pivot 56.

Lors de la poursuite du mouvement de rotation de l'organe de commande 18 autour de son axe de rotation 20, l'élément de guidage 36 s'éloigne du pivot 56 et approche de la fin de la portion courbe 40b.

Le premier organe d'entraînement 42 commence alors à se déplacer en translation longitudinale en sens inverse du sens suivi par ledit organe sur les figures 6 et 7.

De façon correspondante, le second organe d'entraînement 88 se déplace, à son tour, en sens inverse du sens suivi par celui-ci sur les figures 6 et 7 pour déployer progressivement le bras de manipulation 102 à partir de sa position rétractée.

Les deux organes d'entraînement 42 et 88 vont se croiser et, lorsque l'élément de guidage 36 entre dans la portion rectiligne 40c de la rainure profilée 40, le mouvement de pivotement de la structure mobile 14 est achevé et le bras de manipulation 102 poursuit son déploiement vers sa deuxième position d'extension.

Sur la figure 9, on a représenté la structure mobile 14 dans une position pour laquelle les premier et second organes d'entraînement 42 et 88 se sont croisés et dépassés, et poursuivent leurs mouvements de translation longitudinal respectifs suivant la direction et le sens indiqué par les flèches notées G et H.

Cette direction de déplacement qui correspond à la direction de déplacement de l'élément de guidage 36 dans la portion droite 40c de la rainure profilée correspond également à la deuxième direction longitudinale prise par le bras de manipulation 102 et dans laquelle ce bras est disposé en vis-à-vis de l'objet placé dans sa deuxième position, par exemple, verticale.

On constate ainsi que l'unité d'actionnement 16 de la structure mobile 14 provoque un mouvement alternatif de rétractation et d'extension du bras de manipulation 102 tout en permettant à celui-ci d'effectuer un changement de direction qui est, par exemple, dans le cas présenté sur les figures un mouvement de rotation de 90°.

Toutefois, il convient de noter que l'invention ne se limite nullement à un tel changement de direction.

Le mouvement de rotation de l'organe de commande 18 autour de son axe 20 s'achève comme représenté sur la figure 10 et l'élément de guidage 36 parvient en butée au fond de la portion rectiligne 40c de la rainure profilée, dans la position représentée par la lettre B.

Dans cette position, le premier organe d'entraînement 42 se trouve de manière correspondante dans une position extrême et, de même, le second organe d'entraînement 88 est lui aussi dans une position extrême pour laquelle le bras de manipulation 102 a atteint sa deuxième position d'extension.

Dans cette deuxième position d'extension, le bras de manipulation 102 et, plus particulièrement, l'organe de préhension et de positionnement 118 est apte à positionner l'objet 170 dans sa deuxième position, par exemple, verticale sur les figures.

Dans cette position, l'objet 170 est positionné sur un convoyeur non représenté en mettant fin au phénomène d'aspiration par la ventouse.

De même, le second organe de préhension et de positionnement 116 est lui aussi apte, dans cette position, à prendre un autre objet disposé sur le convoyeur afin que le mouvement de retour du bras de manipulation 102, dans la position représentée sur la figure 5, ne se fasse pas à vide.

On notera que dans cette position d'extension, une grande rigidité angulaire est obtenue au niveau des organes de préhension et de positionnement en raison du fait que le galet de came 36 servant d'élément de guidage se trouve déporté à une distance suffisamment éloignée du pivot 56 de la structure mobile.

Ceci permet d'assurer des gestes précis tant de positionnement que de préhension des objets.

Cette caractéristique est particulièrement avantageuse lorsque les objets sont légers et/ou fragiles.

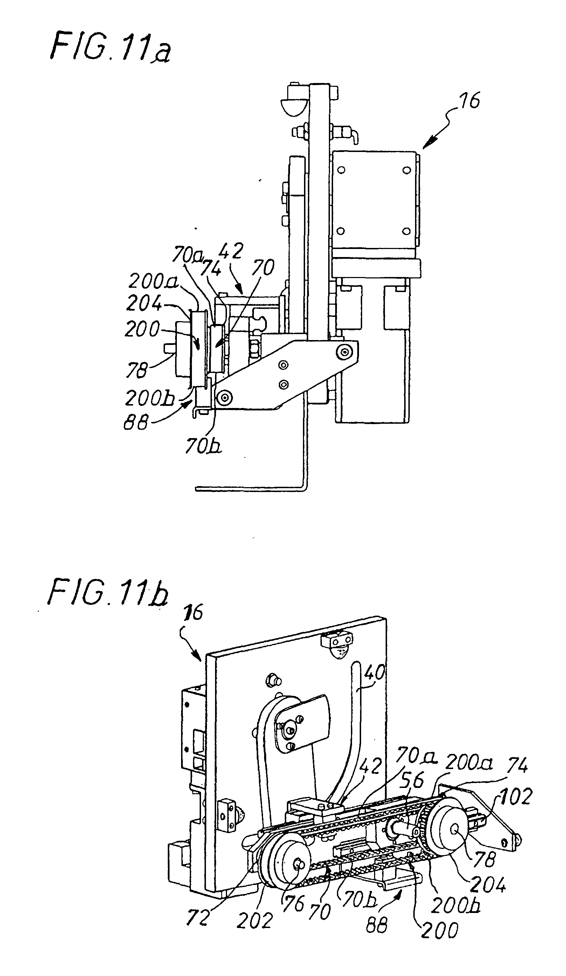

Les figures 11a et 11b dont la description va suivre illustrent une variante de réalisation permettant de modifier la course du bras de manipulation 102 entre sa position rétractée, par exemple, représentée sur la figure 8 et au moins l'une de ses positions d'extension représentée sur la figure 10.

Sur les figures 11a et 11b, seuls ont été représentés les éléments qui ont été modifiés par rapport aux figures 1 à 4 et les éléments qui sont concernés par la description de ces éléments modifiés et par le fonctionnement de cette variante de réalisation.

Ainsi, la figure 11 a représente une vue analogue à la figure 1 dans laquelle le dispositif selon l'invention comporte l'élément de transmission sans fin 70 décrit ci-dessus, appelé premier élément de transmission sans fin, et un second élément de transmission sans fin noté 200.

Comme représenté sur la figure 11b, les deux éléments de transmission sans fin 70 et 200 sont montés sur les deux mêmes axes de rotation 76 et 78.

Le second élément de transmission sans fin 200 est, par exemple, lui aussi une courroie crantée comme le premier élément 70 et ce second élément de transmission sans fin est monté sur deux poulies, respectivement notées 202 et 204, et qui sont disposées côte à côte des poulies respectives 72 et 74 du premier élément de transmission sans fin 70.

Les poulies 202 et 204 sont toutes deux munies d'un épaulement qui fait saillie par rapport à leur face externe.

Tout comme le premier élément de transmission sans fin 70, le second élément peut aussi prendre la forme d'une courroie lisse, d'une bande, d'une chaîne ...

On notera que l'élément de transmission sans fin 70 est de plus petite longueur que l'élément de transmission sans fin 200 et ces deux éléments sont, par exemple, dans un rapport multiplicatif de 1,5, si bien que le déplacement de l'élément 70 d'une unité provoque le déplacement du second élément 200 d'une unité et demie.

Comme représenté sur la figure 11b, l'élément de transmission sans fin 70, tel que décrit en référence aux figures 1 à 4, comporte deux portions 70a et 70b et, l'élément d'entraînement 34, donc le premier organe d'entraînement 42, est attelé à la portion 70a, conformément au mode de réalisation représenté sur les figures 1 à 4.

Le second élément de transmission sans fin 200 comporte lui aussi deux portions, l'une 200a agencée à proximité de la portion 70a et l'autre 200b agencée à proximité de la portion 70b.

Il convient de noter que les portions respectives 200a et 200b du second élément de transmission sans fin 200 se déplacent dans le même sens et dans la même direction que les portions respectives 70a et 70b du premier élément de transmission sans fin 70.

Par ailleurs, le deuxième organe d'entraînement 88, à la différence du mode de réalisation représenté sur les figures 1 à 4, est attelé à la portion 200b du second élément de transmission sans fin 200 et non plus à la portion 70b du premier élément.

Le bras de manipulation 102, de manière identique à ce qui a été décrit en référence aux figures 1 à 4, est lui aussi toujours solidaire du deuxième organe d'entraînement 88.

Ainsi, lors du mouvement du premier organe d'entraînement 42, le deuxième organe d'entraînement 88 est lui aussi, à son tour, entraîné dans un mouvement inverse de celui du premier organe d'entraînement, comme décrit plus haut. Cependant, compte tenu du rapport multiplicatif entre les deux éléments de transmission sans fin 70 et 200, le déplacement de ce deuxième organe d'entraînement 88 a pour effet d'augmenter la course du bras de manipulation 102 entre sa position rétractée, et, par exemple, ses première et deuxième positions d'extension représentées sur les figures 5 et 10.

Grâce à ce second élément de transmission sans fin coopérant avec le premier, on a réalisé une unité de modification de la course du bras de manipulation.

Il convient de noter que dans certaines applications où la course du bras de manipulation doit être réduite, il est également possible de faire coopérer avec le premier élément de transmission sans fin 70 un second élément de transmission sans fin qui, cette fois, est dans un rapport démultiplicatif par rapport au premier élément de transmission sans fin

De cette façon, la course du bras de manipulation 102 se trouve réduite.

Ceci peut être utile lorsque l'unité d'actionnement 16 du dispositif selon l'invention ne permet pas de régler comme on le souhaite la course de l'élément de guidage dans la rainure profilée 40.

On notera toutefois qu'avec un moteur à commande numérique, il est possible d'arrêter le mouvement de l'élément de guidage 36 en tout point de sa trajectoire et, plus particulièrement, dans les portions rectilignes de celle-ci.

## Revendications

1. Dispositif de transfert d'au moins un objet d'une première position vers une deuxième position, comportant :
- une structure mobile (14) portant un bras de manipulation (102) équipé d'au moins un organe de préhension et de positionnement (116, 118) d'au moins un objet (170),
- une unité d'actionnement (16) de la structure mobile qui permet, d'une part, un mouvement alternatif de rétractation et d'extension du bras de manipulation pour amener l'organe de préhension et de positionnement d'une première position d'extension, dans laquelle il est apte à prendre un objet placé dans sa première position, à une position rétractée, puis à une deuxième position d'extension, dans laquelle il est apte à positionner l'objet dans sa deuxième position et, d'autre part, un mouvement de pivotement du bras de manipulation par rapport à un pivot (56) pour amener ledit bras d'une première direction longitudinale, dans laquelle l'organe de préhension et de positionnement est en vis-à-vis de la première position de l'objet, à une deuxième direction longitudinale d'orientation angulaire différente, dans laquelle l'organe de préhension et de positionnement est en vis-à-vis de la deuxième position de l'objet, les deux mouvements se recouvrant au moins en partie dans le temps,
- au moins un élément de guidage (36) de la structure mobile dans son mouvement, l'élément de guidage se déplaçant suivant une trajectoire ayant une portion courbe qui correspond au mouvement de pivotement du bras, le pivot (56) étant agencé à l'extérieur de la courbure.

2. Dispositif selon la revendication 1, **caractérisé en ce que**, lorsque le bras de manipulation (102) est dans une position extrême correspondant à la première ou la deuxième position d'extension, l'élément de guidage (36) est déporté par rapport au pivot (56) et est agencé dans une position (A, B) diamétralement opposée à celle de l'organe de préhension et de positionnement (116, 118) du bras.

3. Dispositif selon la revendication 1 ou 2, **caractérisé en ce que** l'élément de guidage (36) se déplace à l'intérieur d'une rainure profilée (40).

4. Dispositif selon la revendication 3, **caractérisé en ce que** la rainure profilée (40) comporte une rampe (40b) correspondant à la portion courbe de la trajectoire de l'élément de guidage et qui permet, lorsque l'élément de guidage s'engage sur cette rampe sous l'action de l'unité d'actionnement, de provoquer le mouvement de pivotement du bras selon une loi de déplacement douce.

5. Dispositif selon l'une des revendications 1 à 4, **caractérisé en ce que** le bras de manipulation (102) se déplace suivant une loi de déplacement du type (sinθ) - θ, où θ représente le temps.

6. Dispositif selon la revendication 4, **caractérisé en ce que** le profil de la rampe (40b) est déterminé conjointement avec l'unité d'actionnement (16) pour que le mouvement de pivotement du bras s'effectue selon une loi de déplacement douce.

7. Dispositif selon l'une des revendications 1 à 6, **caractérisé en ce que** le mouvement de l'élément de guidage (36) est décomposé en un premier mouvement de translation suivant la première direction longitudinale, un mouvement de pivotement et un deuxième mouvement de translation suivant la deuxième direction longitudinale.

8. Dispositif selon les revendications 3 et 7, **caractérisé en ce que** la rainure profilée (40) a une forme générale de L renversé.

9. Dispositif selon l'une des revendications 1 à 8, **caractérisé en ce que** l'unité d'actionnement (16) est apte à arrêter le mouvement de l'élément de guidage (36) en tout point de sa trajectoire.

10. Dispositif selon la revendication 9, **caractérisé en ce que** l'unité d'actionnement comporte un moteur à commande numérique.

11. Dispositif selon l'une des revendications 1 à 10, **caractérisé en ce que** l'unité d'actionnement (16) transmet un mouvement à la structure mobile (14) par l'intermédiaire d'un organe d'entraînement (34).

12. Dispositif selon la revendication 11, **caractérisé en ce qu'**il comporte une unité (42, 70) de transformation du mouvement transmis à l'organe d'entraînement (34) en un mouvement alternatif d'avance et de recul suivant une direction longitudinale et de transmission de ce mouvement transformé au bras de manipulation.

13. Dispositif selon la revendication 12, **caractérisé en ce que** l'unité de transformation et de transmission de mouvement comporte un élément de transmission sans fin (70) monté autour de deux axes de rotation (76, 78) longitudinalement espacés, ledit élément comportant deux portions (70a, 70b) en vis-à-vis qui, lors d'un mouvement de l'élément sans fin, se déplacent en sens inverse l'une de l'autre, suivant une même direction longitudinale.

14. Dispositif selon la revendication 13, **caractérisé en ce que** l'organe d'entraînement (34) est solidaire de la portion (70a) tandis que le bras de manipulation est solidaire de l'autre portion (70b).

15. Dispositif selon l'une des revendications 1 à 13, **caractérisé en ce qu'**il comporte une unité (200) de modification de la course du bras de manipulation (102) entre sa position rétractée et au moins l'une de ses première et deuxième positions d'extension.

16. Dispositif selon les revendications 13 et 15, **caractérisé en ce que** l'unité de modification de la course du bras comporte un second élément de transmission sans fin (200) monté autour des deux axes de rotation (76, 78) et agencé par rapport au premier élément de transmission (70) de manière à ce que les déplacements respectifs desdits éléments de transmission (70) soient démultipliés l'un par rapport à l'autre.

17. Dispositif selon la revendication 16, **caractérisé en ce que** le second élément de transmission sans fin (200) comporte deux portions (200a, 200b) en vis-à-vis, qui, lors d'un mouvement de l'élément sans fin, se déplacent respectivement dans le même sens et la même direction que les portions (70a, 70b) du premier élément, le bras de manipulation (102) étant solidaire de la portion (200b), tandis que l'organe d'entraînement (34) est solidaire de la portion (70a) du premier élément de transmission sans fin.

18. Dispositif selon la revendication 13 ou 16, **caractérisé en ce que** l'élément de transmission sans fin (70, 200) est une courroie.

19. Dispositif selon les revendications 3 et 11, **caractérisé en ce que** l'organe d'entraînement (34) est relié à l'élément de guidage (36) se déplaçant dans la rainure profilée (40).

20. Dispositif selon la revendication 19, **caractérisé en ce que** l'unité d'actionnement (16) entraîne un organe de commande (18) dans un mouvement de rotation alternatif autour d'un axe (20) agencé à une de ses extrémités (18a), l'extrémité opposée (18b) de l'organe de commande (18) étant aménagée pour recevoir au moins une partie de l'organe d'entraînement.

21. Dispositif selon l'une des revendications 1 à 20, **caractérisé en ce que** le bras de manipulation (102) est équipé de deux organes de préhension et de positionnement (116, 118) d'un objet.

22. Dispositif selon l'une des revendications 1 à 21, **caractérisé en ce qu'**il comporte une chaîne articulée (120) solidaire d'une partie (88) de la structure (14) reliée au bras de manipulation (102) et renfermant des moyens de commande de l'organe de préhension et de positionnement d'un objet.

## Patentansprüche

1. Vorrichtung zur Übertragung von wenigstens einem Objekt bzw. Gegenstand von einer ersten Position zu einer zweiten Position, umfassend:
- eine mobile Struktur (14), welche einen Handhabungs- bzw. Manipulationsarm (102) trägt, welcher mit wenigstens einem Greif- und Positionierorgan (116, 118) für wenigstens ein Objekt (170) ausgerüstet ist,
- eine Betätigungseinheit (16) der mobilen Struktur, welche einerseits eine abwechselnde Bewegung eines Zurückziehens und Ausfahrens bzw. Erstreckens des Manipulationsarms für ein Bringen des Greif- und Positionierorgans von einer ersten Ausfahr- bzw. Erstreckungsposition, in welcher es geeignet ist, ein Objekt zu ergreifen, welches in seiner ersten Position angeordnet ist, zu einer zurückgezogenen Position, dann zu einer zweiten Erstreckungsposition, in welcher es geeignet ist, das Objekt an seiner zweiten Position zu positionieren, und andererseits eine Schwenkbewegung des Manipulationsarms relativ zu einem Zapfen bzw. Schwenkpunkt (56) erlaubt, um den Arm in eine erste Längsrichtung, in welcher das Greif- und Positionierorgan gegenüber der ersten Position des Objekts ist, zu einer zweiten Längsrichtung mit unterschiedlicher Winkelorientierung zu bringen bzw. mitzunehmen, in welcher das Greif- und Positionierorgan gegenüber der zweiten Position des Objekts liegt, wobei die zwei Bewegungen sich wenigstens teilweise in der Zeit überdecken,
- wenigstens ein Element (36) zum Führen der mobilen Struktur in ihrer Bewegung, wobei sich das Führungselement entlang eines Wegs bzw. einer Bahn verschiebt bzw. verlagert, welche(r) einen gekrümmten bzw. gebogenen Abschnitt aufweist, welcher einer Schwenkbewegung des Arms entspricht, wobei der Schwenkzapfen (56) außerhalb der Krümmung aufgebaut bzw. angelenkt ist.

2. Vorrichtung nach Anspruch 1, **dadurch gekennzeichnet, daß**, während sich der Manipulationsarm (102) in einer Grenzposition entsprechend der ersten oder der zweiten Erstreckungsposition befindet, das Führungselement (36) relativ zu dem Schwenkzapfen (56) verschoben ist und zu einer Position (A, B) diametral gegenüberliegend zu derjenigen des Greif- und Positionierorgans (116, 118) des Arms betätigt ist.

3. Vorrichtung nach Anspruch 1 oder 2, **dadurch gekennzeichnet, daß** sich das Führungselement (36) im Inneren einer profilierten Rille (40) verschiebt bzw. verlagert.

4. Vorrichtung nach Anspruch 3, **dadurch gekennzeichnet, daß** die profilierte Rille (40) eine Rampe (40b) entsprechend dem gekrümmten Abschnitt des Wegs des Führungselements umfaßt und welche erlaubt, während das Führungselement in Eingriff auf der Rampe unter der Wirkung der Betätigungseinheit steht, die Bewegung des Schwenkarms gemäß einem sanften Verschiebungs- bzw. Verlagerungsgesetz einzuleiten bzw. herbeizuführen.

5. Vorrichtung nach einem der Ansprüche 1 bis 4, **dadurch gekennzeichnet, daß** sich der Manipulationsarm (102) entsprechend einem Verschiebungs- bzw. Verlagerungsgesetz des Typs (sinθ) - θ verlagert, worin θ die Zeit repräsentiert.

6. Vorrichtung nach Anspruch 4, **dadurch gekennzeichnet, daß** das Profil der Rampe (40b) gemeinsam mit der Betätigungseinheit (16) bestimmt ist, so daß die Bewegung des Schwenkarms gemäß einem sanften Verlagerungsgesetz bewirkt wird.

7. Vorrichtung nach einem der Ansprüche 1 bis 6, **dadurch gekennzeichnet, daß** die Bewegung des Führungselements (36) in eine erste Translationsbewegung entsprechend der ersten Längsrichtung bzw. dieser folgend, eine Schwenkbewegung und eine zweite Translationsbewegung entsprechend der zweiten Längsrichtung bzw. dieser folgend unterteilt bzw. zerlegt ist.

8. Vorrichtung nach den Ansprüchen 3 und 7, **dadurch gekennzeichnet, daß** die profilierte Rille (40) eine allgemeine Form eines umgekehrten L aufweist.

9. Vorrichtung nach einem der Ansprüche 1 bis 8, **dadurch gekennzeichnet, daß** die Betätigungseinheit (16) geeignet ist, die Bewegung des Führungselements (36) an jedem Punkt seines Wegs anzuhalten.

10. Vorrichtung nach Anspruch 9, **dadurch gekennzeichnet, daß** die Betätigungseinheit einen Motor mit numerischer Steuerung umfaßt.

11. Vorrichtung nach einem der Ansprüche 1 bis 10, **dadurch gekennzeichnet, daß** die Betätigungseinheit (16) eine Bewegung auf die mobile Struktur (14) über bzw. unter Zwischenschaltung eines Antriebs- bzw. Mitnahmeorgans bzw. -glieds (34) überträgt.

12. Vorrichtung nach Anspruch 11, **dadurch gekennzeichnet, daß** sie eine Einheit (42, 70) zur Übertragung bzw. Transformation einer Bewegung, welche auf das Mitnahmeorgan (34) übertragen wird, in eine abwechselnde Vorwärts- und Rückwärtsbewegung gemäß einer Längsrichtung und einer Übertragung dieser Bewegung erlaubt, welche auf den Manipulationsarm übertragen bzw. transformiert ist.

13. Vorrichtung nach Anspruch 12, **dadurch gekennzeichnet, daß** die Einheit zur Transformation und Übertragung der Bewegung ein endloses Übertragungselement (70) umfaßt, welches um zwei Rotationsachsen (76, 78) montiert ist, welche in Längsrichtung beabstandet sind, wobei das Element zwei Abschnitte (70a, 70b) einander gegenüberliegend umfaßt, welche sich während einer Bewegung des endlosen Elements in einem umgekehrten Sinn relativ zu einander verlagern, und zwar gemäß einer gleichen Längsrichtung.

14. Vorrichtung nach Anspruch 13, **dadurch gekennzeichnet, daß** das Mitnahmeorgan (34) einstückig bzw. gemeinsam mit dem Abschnitt (70a) ist, während der Manipulationsarm einstückig bzw. gemeinsam mit dem anderen Abschnitt (70b) ist.

15. Vorrichtung nach einem der Ansprüche 1 bis 13, **dadurch gekennzeichnet, daß** sie eine Einheit (200) zur Modifikation des Wegs des Manipulationsarm (102) zwischen seiner zurückgezogenen Position und wenigstens einer seiner ersten und zweiten Erstreckungsposition umfaßt.

16. Vorrichtung nach den Ansprüchen 13 und 15, **dadurch gekennzeichnet, daß** die Einheit zur Modifikation des Wegs des Arms ein zweites, endloses Übertragungselement (200) umfaßt, welches um zwei Rotationsachsen (76, 78) montiert ist und relativ zu dem ersten Übertragungselement (70) derart ausgelegt ist, daß die entsprechenden Verlagerungen dieser Übertragungs- bzw. Transmissionselemente (70) eines relativ zum anderen untersetzt sind.

17. Vorrichtung nach Anspruch 16, **dadurch gekennzeichnet, daß** das zweite endlose Übertragungselement (200) zwei Abschnitte (200a, 200b) einander gegenliegend umfaßt, welche sich während einer Bewegung des endlosen Elements jeweils im gleichen Sinn und in der gleichen Richtung wie die Abschnitte (70a, 70b) des ersten Elements verschieben, wobei der Manipulationsarm (102) gemeinsam bzw. einstückig mit dem Abschnitt (200b) ist, während das Mitnahmeorgan (34) gemeinsam bzw. einstückig mit dem Abschnitt (70a) des ersten, endlosen Übertragungselements ist.

18. Vorrichtung nach Anspruch 13 oder 16, **dadurch gekennzeichnet, daß** das endlose Übertragungselement (70, 200) ein Riemen ist.

19. Vorrichtung nach den Ansprüchen 3 und 11, **dadurch gekennzeichnet, daß** das Mitnahmeorgan (34) mit dem Führungselement (36) verbunden ist, welches sich in der profilierten Rille (40) verschiebt bzw. verlagert.

20. Vorrichtung nach Anspruch 19, **dadurch gekennzeichnet, daß** die Betätigungseinheit (16) ein Steuer- bzw. Regelorgan (18) in einer abwechselnden Rotationsrichtung um eine Achse (20) mitnimmt bzw. antreibt, welche an einem seiner Enden (18a) angelenkt ist, wobei das gegenüberliegende Ende (18b) des Steuerorgans (18) angeordnet bzw. eingerichtet ist, um wenigstens einen Abschnitt des Antriebs- bzw. Mitnahmeorgans aufzunehmen.

21. Vorrichtung nach einem der Ansprüche 1 bis 20, **dadurch gekennzeichnet, daß** der Manipulationsarm (102) mit zwei Greif- und Positionierorganen (116, 118) für ein Objekt ausgerüstet ist.

22. Vorrichtung nach einem der Ansprüche 1 bis 21, **dadurch gekennzeichnet, daß** sie eine gelenkige Kette (120) umfaßt, welche mit einem Teil (88) der Struktur (14) einstückig bzw. verbunden ist, welche mit dem Manipulationsarm (102) verbunden ist, und die Steuermittel des Greif- und Positionierorgans für ein Objekt umschließt bzw. umgibt.

## Claims

1. A device for transferring at least one object from a first position to a second position, comprising:
- a mobile structure (14) carrying a manipulator arm (102) equipped with at least one member (116, 118) for holding and positioning at least one object (170),
- a mobile structure actuator unit (16) for driving, on the one hand, an alternating movement of retraction and extension of the manipulator arm to move the holding and positioning member from a first extended position, in which it is adapted to take an object placed in its first position, to a retracted position, and then to a second extended position, in which it is adapted to place the object in its second position and, on the other hand, pivoting of the manipulator arm relative to a pivot (56) to move said arm from a first longitudinal axis, in which the holding and positioning member faces the first position of the object, to a second longitudinal axis with a different angular orientation in which the holding and positioning member faces the second position of the object, the two movements overlapping at least partly in time, and
- at least one guide member (36) for guiding the movement of the mobile structure, the guide member moving along a trajectory having a curved portion that corresponds to the pivoting of the arm, the pivot (56) being outside the curve.

2. A device according to claim 1, **characterized in that**, when the manipulator arm (102) is in an extreme position corresponding to the first or the second extended position, the guide member (36) is moved away from the pivot (56) to a position (A, B) diametrically opposite that of the holding and positioning member (116, 118) of the arm.

3. A device according to claim 1 or 2, **characterized in that** the guide member (36) moves in a profiled groove (40).

4. A device according to claim 3, **characterized in that** the profiled groove (40) includes a ramp (40b) corresponding to the curved portion of the trajectory of the guide member and which, when the guide member is engaged with the ramp by the actuator unit, causes the arm to pivot in accordance with a soft displacement law.

5. A device according to one of claims 1 to 4, **characterized in that** the manipulator arm (102) moves in accordance with a displacement law of the (sinθ) - θ type, where θ represents time.

6. A device according to claim 4, **characterized in that** the profile of the ramp (40b) is determined conjointly with the actuator unit (16) so that the arm pivots in accordance with a soft displacement law.

7. A device according to one of claims 1 to 6, **characterized in that** the movement of the guide member (36) is divided into a first movement in translation along the first longitudinal axis, a pivoting movement and a second movement in translation along the second longitudinal axis.

8. A device according to claims 3 and 7, **characterized in that** the general shape of the profiled groove (40) is that of an inverted L.

9. A device according to one of claims 1 to 8, **characterized in that** the actuator unit (16) is adapted to stop the movement of the guide member (36) at any point on its trajectory.

10. A device according to claim 9, **characterized in that** the actuator unit comprises a digitally controlled motor.

11. A device according to one of claims 1 to 10, **characterized in that** the actuator unit (16) transmits movement to the mobile structure (14) via a drive member (34).

12. A device according to claim 11, **characterized in that** it comprises a unit (42, 70) for transforming the movement transmitted to the drive member (34) into an alternating forward and rearward movement along a longitudinal axis and transmission of that transformed movement to the manipulator arm.

13. A device according to claim 12, **characterized in that** the movement transformation and transmission unit comprises an endless transmission member (70) mounted around two longitudinally spaced rotation shafts (76, 78) said member comprising two facing portions (70a , 70b) which move in opposite directions along the same longitudinal axis during movement of the endless member.

14. A device according to claim 13, **characterized in that** the drive member (34) is fastened to one portion (70a) and the manipulator arm is fastened to the other portion (70b).

15. A device according to one of claims 1 to 13, **characterized in that** it comprises a unit (200) for modifying the stroke of the manipulator arm (102) between its retracted position and at least one of its first and second extended positions.

16. A device according to claims 13 and 15, **characterized in that** the unit for modifying the stroke of the arm comprises a second endless transmission member (200) mounted around the two rotation shafts (76, 78) and arranged with respect to the first transmission member (70) so that the respective displacements of said transmission members (70) are geared down with respect to each other.

17. A device according to claim 16, **characterized in that** the second endless transmission member (200) comprises two facing portions (200a, 200b) which, during movement of the endless member, respectively move in the same direction along the same axis as the portions (70a, 70b) of the first member, the manipulator arm (102) being fastened to the portion (200b), whereas the drive member (34) is fastened to the portion (70 that are the) of the first endless transmission member.

18. A device according to claim 13 or 16, **characterized in that** the endless transmission member (70, 200) is a belt.

19. A device according to claims 3 and 11, **characterized in that** the drive member (34) is connected to the guide member (36) moving in the profiled groove (40).

20. A device according to claim 19, **characterized in that** the actuator unit (16) drives a control member (18) in alternating rotation about a shaft (20) at one of its ends (18a), the opposite end (18b) of the drive member (18) being adapted to receive at least a portion of the drive member.

21. A device according to one of claims 1 to 20, **characterized in that** the manipulator arm (102) is equipped with two members (116, 118) for holding and positioning an object.

22. A device according to one of claims 1 to 21, **characterized in that** it comprises an articulated chain (120) fastened to a portion (88) of the structure (14) connected to the manipulator arm (102) and containing control means for the member for holding and positioning an object.
